# EUROPEAN PATENT SPECIFICATION

(11) **EP 3 694 914 B1**
(45) Date of publication and mention of the grant of the patent: **01.12.2021**
(21) Application number: 18797269.0
(22) Date of filing: 10.10.2018
(51) Int. Cl.: C08J 9/00, C08J 9/14

(54) **PROCESS FOR THE MANUFACTURE OF THERMOPLASTIC FOAM CONTAINING HFO-1336MZZ(Z) AND HFO-1336MZZ(E)**
VERFAHREN ZUR HERSTELLUNG VON THERMOPLASTISCHEM SCHAUM MIT HFO-1336MZZ(Z) UND HFO-1336MZZ(E)
PROCÉDÉ DE FABRICATION DE MOUSSE THERMOPLASTIQUE CONTENANT DU HFO-1336MZZ(Z) ET HFO-1336MZZ(E)

(30) Priority: 10.10.2017 US 201762570422 P
(43) Date of publication of application: 19.08.2020
(73) Proprietor: The Chemours Company FC, LLC, Wilmington, DE 19899 (US)
(72) Inventor: KONTOMARIS, Konstantinos, Wilmington Delaware 19808 (US)
(74) Representative: Dannenberger, Oliver Andre
(86) International application number: PCT/US2018/055186
(87) International publication number: WO 2019/075040

(56) References cited:
- EP-A1- 2 563 485
- EP-A1- 2 706 086
- WO-A1-2011/106652
- WO-A1-2013/123184
- WO-A1-2016/025138
- WO-A1-2017/192550
- US-A1- 2016 009 886

## Description

### TECHNICAL FIELD

This invention relates to processes of preparing thermoplastic foams comprising HFO-1336mzz(E), and more particularly to processes of preparing thermoplastic foams comprising HFO-1336mzz(E) in the presence of a blowing agent which is HFO-1336mzz(Z) and a co-blowing agent, wherein the process is performed at conditions sufficient to isomerize at least a portion of the HFO-1336mzz(Z) to the HFO-1336mzz(E).

### BACKGROUND

The production of various types of foams historically employed chlorofluorocarbons (*i*.*e*., CFCs) as the blowing agent. In general, the CFCs yield foams exhibiting good thermal insulation, low flammability, and excellent dimensional stability. However, despite these advantages the CFCs have fallen into disfavor due to their implication in the destruction of stratospheric ozone, as well as their implication in contributing to global warming. Thus, there is a need for blowing agents to have both low ODP (oxygen depletion potential) and GWP (global warming potential).

WO 2013/123184 A1, WO 2016/025138 A1, WO 2011/106652 A1 and EP 2 563 485 A1 disclose processes of preparing a thermoplastic polymer comprising E-1,1,1,4,4,4-hexafluoro-2-butene by mixing the polymer with E-1,1,1,4,4,4-hexafluoro-2-butene and a co-blowing agent.

EP 2 706 086 A1, US 2016/009886 A1 and WO 2017/192550 A1 disclose processes of preparing a thermoplastic polymer by extruding the polymer with Z-1,1,1,4,4,4-hexafluoro-2-butene and a co-blowing agent.

### SUMMARY

The present application provides, *inter alia,* a process of preparing a thermoplastic polymer comprising E-1,1,1,4,4,4-hexafluoro-2-butene *(i.e.,* HFO-1336mzz(E) or E-1336mzz) the process comprising heating the polymer in the presence of a blowing agent comprising Z-1,1,1,4,4,4-hexafluoro-2-butene *(i.e.,* HFO-1336mzz(Z) or Z-1336mzz) and at least one additional co-blowing agent, at a temperature sufficient to isomerize at least a portion of the Z-1,1,1,4,4,4-hexafluoro-2-butene to the E-1,1,1,4,4,4-hexafluoro-2-butene.

The present application further provides foamable compositions (*i*.*e*., thermoplastic polymer compositions, thermoplastic polymer melts, and the like) comprising E-1,1,1,4,4,4-hexafluoro-2-butene which are prepared according to one or more of the processes described herein.

The present application further provides thermoplastic foams (*e.g*., a closed cell foam comprising E-1,1,1,4,4,4-hexafluoro-2-butene which are prepared according to one or more of the processes described herein.

Unless otherwise defined, all technical and scientific terms used herein have the same meaning as commonly understood by one of ordinary skill in the art to which this invention belongs. Methods and materials are described herein for use in the present invention; other, suitable methods and materials known in the art can also be used. The materials, methods, and examples are illustrative only and not intended to be limiting. In case of conflict, the present specification, including definitions, will control.

### DESCRIPTION OF THE DRAWINGS

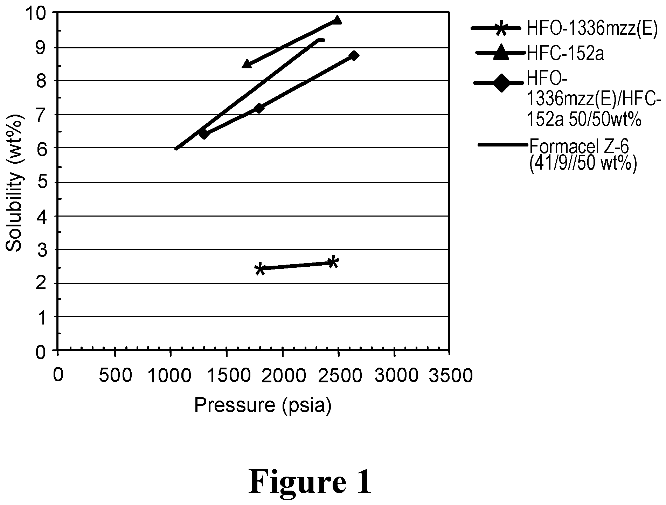

Figure 1 shows solubility of a HFC-152a/HFO-1336mzz(E) (50/50wt%) blend in polystyrene CX-5197 at 179 °C compared to the solubility of neat HFO-1336mzz(E), HFC-152a, and reference blowing agent HFC-134a/HFC-134/HFC-152a (41:9:50 wt%) (*i*.*e*., Formacel^{®} Z-6).

In the following description, the unit psi or psia represents 6,9 kPa (SI unit).

### DETAILED DESCRIPTION

Incumbent agents with high global warming potentials (GWPs) for the expansion of thermoplastic foam, e.g. extruded polystyrene foam (XPS), are under regulatory pressure. HFO-1336mzz(Z) and HFO-1336mzz(E) could, in principle, be used as low-GWP agents for the expansion of polystyrene (or other thermoplastic polymer) into foam with high thermal insulation capability. The thermal insulation of foam containing mixtures of HFO-1336mzz(Z) and HFO-1336mzz(E) would be expected to be superior to that of foam containing only HFO-1336mzz(Z) at temperatures at which HFO-1336mzz(E) in the foam cells remains in vapor state while HFO-1336mzz(Z) condenses. However, the proportion of HFO-1336mzz(E) in a blowing agent (*e.g*., an HFO-1336mzz(Z)/HFO-1336mzz(E) blend or an HFO-1336mzz(Z)/HFO-1336mzz(E)/HFC-152a blend) used to expand polystyrene foam is limited by the low solubility of HFO-1336mzz(E) in molten polystyrene under the operating conditions of the incumbent extrusion process, as shown in Figure 1. For example, the solubility of Z-1336mzz in molten polystyrene has previously been determined according to be 5.7 wt%, and the solubility of E-1336mzz in molten polystyrene has previously been determined to be 2.4 wt%, and it has been found that solubility of these isomers in molten polystyrene is substantially insensitive to pressure (see *e.g.,* International Patent Application No.: PCT/US2017/031052). Therefore, means of increasing the feasible content of HFO-1336mzz(E) in extruded polystyrene foam would be advantageous. Accordingly, the present application provides polystyrene foam extrusion conditions that promote stereo-isomerization of HFO-1336mzz(Z) to HFO-1336mzz(E).

### Definitions

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

As used herein, the term "about" is meant to account for variations due to experimental error (*e*.*g*., plus or minus approximately 10% of the indicated value).

As used herein, the term "consisting of" excludes any element, step, or ingredient not specified. If in the claim, such would close the claim to the inclusion of materials other than those recited except for impurities ordinarily associated therewith. When the phrase "consists of" or "consisting of" appears in a clause of the body of a claim, rather than immediately following the preamble, it limits only the element set forth in that clause; other elements are not excluded from the claim as a whole.

As used herein, the term "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term "consists essentially of" or "consisting essentially of" occupies a middle ground between "comprising" and "consisting of".

When an amount, concentration, or other value or parameter is given as either a range, preferred range or a list of upper preferable values and/or lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

As used herein, the term "Cₙ₋ₘ alkyl", employed alone or in combination with other terms, refers to a saturated hydrocarbon group that may be straight-chain or branched, having n to m carbons.

As used herein, the term "Cₙ₋ₘ alkenyl" refers to an alkyl group (*i.e..,* a saturated hydrocarbon group that may be straight-chain or branched) having one or more double carbon-carbon bonds and having n to m carbons. Example alkenyl groups include, but are not limited to, ethenyl, *n*-propenyl, isopropenyl, n-butenyl, *sec*-butenyl, and the like. In some embodiments, the alkenyl moiety contains 2 to 6, 2 to 4, or 2 to 3 carbon atoms.

As used herein, the term "aryl" refers to an aromatic hydrocarbon group, which may be monocyclic or polycyclic (*e*.*g*., having 2, 3 or 4 fused rings). The term "Cₙ₋ₘ aryl" refers to an aryl group having from n to m ring carbon atoms. Aryl groups include, e.g., phenyl, naphthyl, anthracenyl, and the like. In some embodiments, aryl groups have from 6 to 10 carbon atoms. In some embodiments, the aryl group is phenyl.

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100-year time horizon is commonly the value referenced.

As used herein the term "Ozone depletion potential" (ODP) is defined in "The Scientific Assessment of Ozone Depletion, 2002, A report of the World Meteorological Association's Global Ozone Research and Monitoring Project," section 1.4.4, pages 1.28 to 1.31 (see first paragraph of this section). ODP represents the extent of ozone depletion in the stratosphere expected from a compound on a mass-for-mass basis relative to fluorotrichloromethane (CFC-11).

### Processes and Foams of the Invention

The present application provides, *inter alia,* a process of preparing a thermoplastic polymer comprising E-1,1,1,4,4,4-hexafluoro-2-butene (*i.e.,* HFO-1336mzz(E)), wherein the process is performed under conditions sufficient to isomerize (*e*.*g*., stereo-isomerize) at least a portion of the Z-1,1,1,4,4,4-hexafluoro-2-butene (*i.e.,* HFO-1336mzz(Z)) to the E-1,1,1,4,4,4-hexafluoro-2-butene *(i.e.,* HFO-1336mzz(E)), wherein the temperature sufficient to isomerize at least a portion of the Z-1336mzz to the E-1336mzz is at least 230°C.

In some embodiments, the thermoplastic polymer prepared according to a process of the invention comprises a mixture of E-1,1,1,4,4,4-hexafluoro-2-butene and Z-1,1,1,4,4,4-hexafluoro-2-butene.

In some embodiments, the conditions sufficient to isomerize at least a portion of the Z-1,1,1,4,4,4-hexafluoro-2-butene to the E-1,1,1,4,4,4-hexafluoro-2-butene comprise any combination of temperature, pressure, and mixing time (*i*.*e*., retention time), sufficient to isomerize at least a portion of the Z-1,1,1,4,4,4-hexafluoro-2-butene to the E-1,1,1,4,4,4-hexafluoro-2-butene.

In some embodiments, the process of invention comprises heating the polymer in the presence of a blowing agent comprising Z-1,1,1,4,4,4-hexafluoro-2-butene and at least one additional co-blowing agent, at a temperature (*e*.*g*., a first temperature) sufficient to isomerize at least a portion of the Z-1,1,1,4,4,4-hexafluoro-2-butene to the E-1,1,1,4,4,4-hexafluoro-2-butene.

In some embodiments, the blowing agent is substantially free of the E-1,1,1,4,4,4-hexafluoro-2-butene prior to the heating. For example, in some embodiments the blowing agent comprises less than about 1 mole percent, less than about 0.5 mole percent, less than about 0.1 mole percent, less than about 0.01 mole percent, or less than about 0.001 mole percent of the E-1,1,1,4,4,4-hexafluoro-2-hutene prior to the heating.

In some embodiments, the co-blowing agent is substantially free of the E-1,1,1,4,4,4-hexafluoro-2-butene prior to the heating. For example, in some embodiments the co-blowing agent comprises less than about 1 mole percent, less than about 0.5 mole percent, less than about 0.1 mole percent, less than about 0.01 mole percent, or less than about 0.001 mole percent of the E-1,1,1,4,4,4-hexafluoro-2-butene prior to the heating.

In some embodiments, the blowing agent and co-blowing agent are each substantially free of the E-1,1,1,4,4,4-hexafluoro-2-butene prior to the heating. For example, in some embodiments the blowing agent and co-blowing agent each comprise less than about 1 mole percent, less than about 0.5 mole percent, less than about 0.1 mole percent, less than about 0.01 mole percent, or less than about 0.001 mole percent of the E-1,1,1,4,4,4-hexafluoro-2-butene prior to the heating.

In some embodiments, the temperature (*e*.*g*., the first temperature) sufficient to isomerize at least a portion of the Z-1,1,1,4,4,4-hexafluoro-2-butene to the E-1,1,1,4,4,4-hexafluoro-2-butene is at least 250°C.

In some embodiments, the temperature (*e.g*., the first temperature) sufficient to isomerize at least a portion of the Z-1,1,1,4,4,4-hexafluoro-2-butene to the E-1,1,1,4,4,4-hexafluoro-2-butene is from 230°C to 350°C.

In some embodiments, the temperature (*e.g*., the first temperature) sufficient to isomerize at least a portion of the Z-1,1,1,4,4,4-hexafluoro-2-butene to the E-1,1,1,4,4,4-hexafluoro-2-butene is from 230°C to 300°C.

In some embodiments, the temperature (*e.g*., the first temperature) sufficient to isomerize at least a portion of the Z-1,1,1,4,4,4-hexafluoro-2-butene to the E-1,1,1,4,4,4-hexafluoro-2-butene is from 230°C to 275°C.

In some embodiments, the temperature (*e*.*g*., the first temperature) sufficient to isomerize at least a portion of the Z-1,1,1,4,4,4-hexafluoro-2-butene to the E-1,1,1,4,4,4-hexafluoro-2-butene is from 250°C to 350°C.

In some embodiments, the temperature (*e*.*g*., the first temperature) sufficient to isomerize at least a portion of the Z-1,1,1,4,4,4-hexafluoro-2-butene to the E-1,1,1,4,4,4-hexafluoro-2-butene is from 250°C to 275°C.

In some embodiments, the heating at the first temperature is performed at a first pressure of from about 1 00 psi to about 5000 psi, for example, about 100 psi to about 4000 psi, about 100 psi to about 2000 psi, about 100 psi to about 1000 psi, about 1000 psi to about 5000 psi, about 1000 psi to about 4000 psi, about 1000 psi to about 2000 psi, about 2000 psi to about 5000 psi, about 2000 psi to about 4000 psi, or about 4000 psi to about 5000 psi.

In some embodiments, the heating at the first temperature is performed at a first pressure of from about 500 psi to about 4000 psi.

In some embodiments, the heating at the first temperature is performed at a first pressure of from about 750 psia to about 3000 psia.

In some embodiments, the heating at the first temperature is performed at a first pressure of from about 900 psia to about 2750 psia.

In some embodiments, the process of the invention further comprises heating the polymer in the presence of the blowing agent and co-blowing agent at a second temperature which is greater than the first temperature.

In some embodiments, the second temperature is a temperature sufficient to produce phase separation of a phase enriched in the Z-1,1,1,4,4,4-hexafluoro-2-butene from the polymer.

In some embodiments, the second temperature is a temperature below the decomposition temperature of the Z-1,1,1,4,4,4-hexafluoro-2-butene and E-1,1,1,4,4,4-hexafluoro-2-butene.

In some embodiments, the second temperature is a temperature sufficient to produce less than about 10 weight percent decomposition of the Z-1,1,1,4,4,4-hexafluoro-2-butene.

In some embodiments, the second temperature is a temperature sufficient to produce less than about 5 weight percent decomposition of the Z-1,1,1,4,4,4-hexafluoro-2-butene.

In some embodiments, the second temperature is a temperature sufficient to produce less than about 1 weight percent decomposition of the Z-1,1,1,4,4,4-hexafluoro-2-butene.

In some embodiments, the phase separation comprises spinodal phase separation.

In some embodiments, the process of the invention is performed in the presence or absence of an isomerization catalyst or an isomerization promoter (*e.g*., a compound that promotes isomerization of the Z-1,1,1,4,4,4-hexafluoro-2-butene to E-1,1,1,4,4,4-hexafluoro-2-butene).

In some embodiments, the process of the invention is performed in the absence of an isomerization catalyst or isomerization promoter.

In some embodiments, the process of the invention is performed in the absence of an isomerization catalyst or isomerization promoter, wherein the first temperature is greater than 250°C.

In some embodiments, the process of the invention is performed in the presence of an isomerization catalyst or isomerization promoter.

In some embodiments, the isomerization catalyst or isomerization promoter comprises a compound containing at least one atom selected from the group consisting of chlorine, bromine, and iodine.

In some embodiments, the isomerization catalyst or isomerization promoter comprises a halogenated flame retardant agent, a hydrogen halide, or a combination thereof.

In some embodiments, the isomerization catalyst or isomerization promoter comprises a halogenated flame retardant agent.

In some embodiments, the halogenated flame retardant agent is a brominated flame retardant agent or a chlorinated flame retardant agent.

In some embodiments, the halogenated flame retardant agent is tetrabromo-bis phenol A.

In some embodiments, the isomerization catalyst or isomerization promoter is a polymeric flame retardant agent.

In some embodiments, the isomerization catalyst or isomerization promoter is PolyFR.

In some embodiments, the isomerization catalyst or isomerization promoter comprises a hydrogen halide.

In some embodiments, the hydrogen halide is hydrogen bromide or hydrogen chloride.

In some embodiments, the process of the invention is performed in the presence of an isomerization catalyst or isomerization promoter, wherein the temperature sufficient (*e.g.,* the first temperature) to isomerize at least a portion of the Z-1,1,1,4,4,4-hexafluoro-2-butene to the E-1,1,1,4,4,4-hexafluoro-2-butene is 230°C or greater.

In some embodiments, the process of the invention is performed in the presence of an isomerization catalyst or isomerization promoter, wherein the temperature sufficient (*e*.*g*., the first temperature) to isomerize at least a portion of the Z-1,1,1,4,4,4-hexafluoro-2-butene to the E-1,1,1,4,4,4-hexafluoro-2-butene is from 230°C to 350°C, for example, 200°C to 300°C, 230°C to 275°C, 230°C to 250°C, 250°C to 350°C, 250°C to 300°C, 250°C to 275°C, 275°C to 350°C, 275 to 300°C, or 300°C to 350°C.

In some embodiments, the process of the invention is performed in the presence of an isomerization catalyst or isomerization promoter, wherein the temperature sufficient (*e.g*., the first temperature) to isomerize at least a portion of the Z-1,1,1,4,4,4-hexafluoro-2-butene to the E-1,1,1,4,4,4-hexafluoro-2-butene is greater than 230°C.

In some embodiments, the process of the invention is performed in the presence of an isomerization catalyst, wherein the temperature sufficient (*e*.*g*., the first temperature) to isomerize at least a portion of the Z-1,1,1,4,4,4-hexafluoro-2-butene to the E-1,1,1,4,4,4-hexafluoro-2-butene is 230°C.

In some embodiments, the additional co-blowing agent increases the solubility of Z-1,1,1,4,4,4-hexafluoro-2-butene in the thermoplastic polymer during said heating.

In some embodiments, the process of the invention is performed in the presence of an isomerization catalyst or isomerization promoter, wherein the temperature sufficient (*e.g.,* the first temperature) to isomerize at least a portion of the Z-1,1,1,4,4,4-hexafluoro-2-butene to the E-1,1,1,4,4,4-hexafluoro-2-butene is from 230°C to 350°C.

In some embodiments, the co-blowing agent used in the process of the invention is a co-blowing agent having a GWP of 150 or less.

In some embodiments, the co-blowing agent used in the process of the invention is a co-blowing agent having a GWP of 100 or less.

In some embodiments, the co-blowing agent used in the process of the invention is a co-blowing agent having a GWP of 75 or less.

In some embodiments, the additional co-blowing agent is selected from HFC-152a, HFC-134, HFC-134a, HFC-236ea, HFC-245fa, HFC-365mfc, CO₂, dimethyl ether, ethanol, methyl formate, CO₂, dimethyl ether, E-HFO-1234ze, Z-HFO-1234ze, E-HCFO-1233zd, Z-HCFO-1233zd, E-HCFO-1224yd, Z-HCFO-1224yd, and HFO-1234yf, or any combination thereof.

In some embodiments, the additional co-blowing agent is HFC-152a.

In some embodiments, the blowing agent comprises about 75 weight percent or less of the Z-1,1,1,4,4,4-hexafluoro-2-butene, for example, about 70 weight percent or less, about 60 weight percent or less, about 50 weight percent or less, about 40 weight percent or less, about 30 weight percent or less, about 20 weight percent or less, or about 10 weight percent or less.

In some embodiments, the blowing agent comprises about 10 to about 75 weight percent Z-1,1,1,4,4,4-hexafluoro-2-butene.

In some embodiments, the blowing agent comprises about 10 to about 70 weight percent Z-1,1,1,4,4,4-hexafluoro-2-butene.

In some embodiments, the blowing agent comprises about 10 to about 60 weight percent Z-1,1 ,1,4,4,4-hexafluoro-2-butene.

In some embodiments, the blowing agent comprises about 10 to about 75 weight percent Z-1,1,1,4,4,4-hexafluoro-2-butene and about 90 to about 25 weight percent of the co-blowing agent.

In some embodiments, the blowing agent comprises about 10 to about 70 weight percent Z-1,1,1,4,4,4-hexafluoro-2-butene and about 90 to about 30 weight percent of the co-blowing agent.

In some embodiments, the blowing agent comprises about 10 to about 60 weight percent Z-1,1,1,4,4,4-hexafluoro-2-butene and about 90 to about 40 weight percent of the co-blowing agent.

In some embodiments, the blowing agent comprises about 40 to about 60 weight percent Z-1,1,1,4,4,4-hexafluoro-2-butene and about 60 to about 40 weight percent HFC-152a.

In some embodiments, the blowing agent comprises about 10 to about 20 weight percent Z-1,1,1,4,4,4-hexafluoro-2-butene and about 90 to about 80 weight percent HFC-152a.

In some embodiments, about 0.1 weight percent or greater of the Z-1,1,1,4,4,4-hexafluoro-2-butene is isomerized to the E-1,1,1,4,4,4-hexafluoro-2-butene, for example, about 1 weight percent or greater, about 10 weight percent or greater, about 20 weight percent or greater, about 35 weight percent or greater, about 50 weight percent or greater, about 75 weight percent or greater, about 90 weight percent or greater, about 95 weight percent or greater, about 97 weight percent or greater, about 99 weight percent or greater, or about 99.5 weight percent or greater.

In some embodiments, about 0.1 weight percent to about 99.9 weight percent of the Z-1,1,1,4,4,4-hexafluoro-2-butene is isomerized to the E-1,1,1,4,4,4-hexafluoro-2-butene, for example, about 0.1 to about 99 weight percent, about 0.1 to about 95 weight percent, about 0.1 to about 75 weight percent, about 0.1 to about 50 weight percent, about 0.1 to about 25 weight percent, about 0.1 to about 10 weight percent, about 10 to about 99.9 weight percent, about 10 to about 99 weight percent, about 10 to about 95 weight percent, about 10 to about 75 weight percent, about 10 to about 50 weight percent, about 10 to about 25 weight percent, about 25 to about 99.9 weight percent, about 25 to about 99 weight percent, about 25 to about 95 weight percent, about 25 to about 75 weight percent, about 25 to about 50 weight percent, about 50 to about 99.9 weight percent, about 50 to about 99 weight percent, about 50 to about 95 weight percent, about 50 to about 75 weight percent, about 75 to about 99.9 weight percent, about 75 to about 99 weight percent, about 75 to about 95 weight percent, about 95 to about 99.9 weight percent, about 95 to about 99 weight percent, or about 99 to about 99.9 weight percent of the Z-1,1,1,4,4,4-hexafluoro-2-butene is isomerized to the E-1,1,1,4,4,4-hexafluoro-2-butene.

In some embodiments, about 10 weight percent to about 20 weight percent of the Z-1,1,1,4,4,4-hexafluoro-2-butene is isomerized to the E-1,1,1,4,4,4-hexafluoro-2-butene.

In some embodiments, the process of the invention further comprises heating the polymer, blowing agent, and co-blowing agent in the presence of one or more additives. Exemplary additives include, but are not limited to, nucleating agents, cell stabilizer agents, surfactants, preservative colorants, antioxidants, reinforcing agents, fillers, antistatic agents, IR attenuating agents, extrusion aids, plasticizers, viscosity modifiers, or any combination thereof, in an amount to obtain the effect desired.

In some embodiments, the process of the invention is performed in the presence of a nucleating agent.

In some embodiments, the nucleating agent is selected from talc, graphite and magnesium silicate.

In some embodiments, the themoplastic polymer is an alkenyl aromatic polymer. As used herein, the term "alkenyl aromatic polymer" refers to a polymer formed from a alkenyl-aromatic monomer units. In some embodiments, the alkenyl-aromatic monomer unit is a C₂₋₆ alkenyl-C₆₋₁₀ aryl monomer unit. In some embodiments, the alkenyl-aromatic monomer unit is a C₂₋₆ alkenyl-phenyl monomer unit, wherein the phenyl is optionally substituted. In some embodiments, the alkenyl aromatic polymer is polystyrene.

The polystyrene can be styrene homopolymer or can contain copolymerized monomer other than styrene (*i*.*e*., polystyrene copolymer). In some embodiments, the thermoplastic polymer comprises a blend of polystyrene and an additional thermoplastic polymer. In some embodiments, the additional thermoplastic polymer is a copolymer of styrene with a monomer other than styrene (*e*.*g*., acrylonitrile).

In some embodiments, the thermoplastic polymer is selected from polystyrene, acrylonitrile butadiene styrene, styrene acrylonitrile co-polymer, and blends thereof.

Whether the thermoplastic polymer being foamed is polystyrene or blends of polystyrene with other thermoplastic polymer, styrene is preferably the dominant polymerized monomer (unit) in the thermoplastic polymer being foamed. In some embodiments, the polymerized units of styrene constitute at least 70 mol %, at least 80 mol %, at least 90 mol %, or at least 100 mol % of the polymerized monomer units of the thermoplastic polymer.

When the thermoplastic polymer contains styrene copolymer, the amount of the additional monomer copolymerized with the styrene is such that the styrene content of the copolymer is at least 60 mol % of the copolymer, at least 70 mol %, at least 80 mol %, or at least 90 mol % of the copolymer, based on the total number of moles (*i*.*e*., 100%) of the copolymer. It is understood that these ratios apply whether the styrene copolymer is the only styrene-containing polymer in the thermoplastic polymer or is a blend with other thermoplastic polymer, such as styrene homopolymer or other styrene copolymer.

In some embodiments, the thermoplastic polymer comprises styrene homopolymer. When the thermoplastic polymer is a blend of polystyrene and other thermoplastic polymer as described above, the polystyrene component of this blend is preferably styrene homopolymer comprising at least 80 wt% of the combined weight of polystyrene and other thermoplastic polymer.

The molecular weight of the thermoplastic polymer comprising polystyrene being foamed is sufficiently high to provide the strength necessary for the requirements of the foam application. The strength requirement determines the minimum density of the foamed product. The high molecular weight of the thermoplastic polymer comprising polystyrene also contributes to the strength of the foamed product. An indicator of molecular weight is the rate at which the molten polymer flows through a defined orifice under a defined load. The lower the flow, the higher the molecular weight. Measurement of the melt flow rate is determined in accordance with ASTM D 1238 at 200°C and using a 5 kg weight on the molten polymer. The weight of molten polymer flowing through the orifice in a defined amount of time, enables the melt flow rate to be reported in g/10 min. Preferably the melt flow rate of the thermoplastic polymer comprising polystyrene is no greater than 20 g/10 min, more preferably no greater than 15 g/10 min, and most preferably, no greater than 10 g/10 min. Surprisingly the higher the molecular weight (lower the melt flow rate), the better the foaming result, especially with respect to the attainability of low density foamed products, while still achieving smooth skin on the foamed product. Preferably the minimum melt flow rate for all the melt flow rates disclose herein is at least 1 g/10 min, whereby the melt flow rate ranges disclosed herein are 1 to 25, 1 to 20, 1 to 15, and 1 to 10 g/10 min. In some embodiments, the melt flow rate is about 25 g/10 min or less, as determined in accordance with the procedure of ASTM D 1238 at 200°C using a 5 kg weight on the molten polymer.

In some embodiments, the thermoplastic polymer comprising E-1,1,1,4,4,4-hexafluoro-2-butene prepared according to the process of the invention is a foamable composition (*i*.*e*., a polymer melt composition).

In some embodiments, the process of the invention further comprises extruding the thermoplastic polymer to form a thermoplastic polymer foam comprising E-1,1,1,4,4,4-hexafluoro-2-butene.

In some embodiments, the process of the invention is performed in an extruder to 1) form the foamable composition into a desired form; and 2) to extrude the foamable composition to form a thermoplastic polymer foam comprising E-1,1,1,4,4,4-hexafluoro-2-butene.

When the process of the invention is performed in an extruder, the thermoplastic polymer forms the feed to the extruder. The blowing agent and co-blowing agent are preferably fed into the extruder at a location intermediate to the feed and extrusion ends of the extruder, typically into the foamable composition that is created as the extrusion screw advances the feeds to the extruder along its length. Additional additives may be added where convenient and as may be dictated by the state of the additive. For example, solid additives can be conveniently be added to the feed end of the extruder, possibly as a mixture with the polymer feed in particulate form to the extruder. The resulting foamable composition within the extruder is extruded through a die, thereby allowing the foamable composition to expand into the foamed product of a desired shape (*e*.*g*., a sheet, a plank, a rod, or a tube) and subsequently cool.

When the process of the invention is performed in an extruder, the thermoplastic polymer *(i.e.,* the foamable composition) is cooled such that the temperature at which the extrusion is performed is preferably at least 125°C and more preferably at least 130°C. In some embodiments, the temperature at which the extrusion is performed is a temperature less than the first temperature of the process of the invention. In some embodiments, the maximum value for all the minimum extrusion temperatures disclosed herein is about 150°C or less. In some embodiments, the extruding is performed at a temperature of from about 100°C to about 150°C. In some embodiments, the extruding is performed at a temperature of from about 110°C to about 140°C.

In some embodiments, the extrusion temperature disclosed herein is the temperature of the polymer melt at the time of extrusion.

When the process of the invention is performed in an extruder, the extrusion is preferably performed with a pressure of at least 1500 psi (103 Bar) and more preferably at least 1600 psi (110 Bar). The maximum value for the minimum extrusion pressures disclosed herein is preferably no greater than 2000 psi (138 Bar). In some embodiments, the extruding is performed at a pressure of from about 1500 psi to about 2000 psi. In some embodiments, the extrusion pressure disclosed herein is the pressure inside the extrusion die.

In some embodiments, the extruding is performed at a pressure of from about 100 psi to about 5000 psi, for example, about 100 psi to about 4000 psi, about 100 psi to about 2000 psi, about 100 psi to about 1000 psi, about 1 000 psi to about 5000 psi, about 1000 psi to about 4000 psi, about 1000 psi to about 2000 psi, about 2000 psi to about 5000 psi, about 2000 psi to about 4000 psi, or about 4000 psi to about 5000 psi.

In some embodiments, the extruding is performed at a pressure of from about 500 psi to about 4000 psi.

In some embodiments, the extruding is performed at a pressure of from about 750 psia to about 3000 psia.

In some embodiments, the extruding is performed at a pressure of from about 900 psia to about 2750 psia.

It is understood that the melt flow rates, temperatures, and pressures described herein can be used in any combination in the practice of the present invention to obtain the particular foamed structure desired.

In some embodiments, the thermoplastic polymer foams comprising E-1,1,1,4,4,4-hexafluoro-2-butene comprise one or more of the following properties:
- Closed cells - at least 80%, or at least 90%, or at least 95%, and having an average cell size, for example, of from about 0.02 to about 5 mm;
- Density no greater than about 40 g/m³, no greater than about 35 kg/m³, or no greater than about 30 kg/m³, and
- Smooth skin as described above;

In some embodiments, the present application provides a process of preparing a thermoplastic polystyrene foam comprising E-1,1,1,4,4,4-hexafluoro-2-butene, the process comprising:
i) mixing the polystyrene with a blowing agent comprising Z-1,1,1,4,4,4-hexafluoro-2-butene and an additional co-blowing agent which is HFC-152a, to form a first polystyrene mixture;
ii) heating the first polystyrene mixture to a temperature greater than about 250°C to form a second polystyrene mixture comprising E-1,1,1,4,4,4-hexafluoro-2-butene; and
iii) extruding the second polystyrene mixture at a temperature of from about 110°C to about 140°C to form the thermoplastic polystyrene foam.

In some embodiments, the process further comprises heating the second polystyrene mixture to a second temperature which is greater than the first temperature, prior to the extruding of step iii).

The present application further provides a process of preparing a thermoplastic polystyrene foam comprising E-1,1,1,4,4,4-hexafluoro-2-butene, the process comprising:
i) mixing the polystyrene with a blowing agent comprising about 75 weight percent or less Z-1,1,1,4,4,4-hexafluoro-2-butene and an additional co-blowing agent which is HFC-152a, to form a first polystyrene mixture;
ii) heating the first polystyrene mixture to a temperature greater than about 250°C to form a second polystyrene mixture comprising E-1,1,1,4,4,4-hexafluoro-2-butene; and
iii) extruding the second polystyrene mixture at a temperature of from about 110°C to about 140°C to form the thermoplastic polystyrene foam.

In some embodiments, the process further comprises heating the second polystyrene mixture to a second temperature which is greater than the first temperature, prior to the extruding of step iii).

In some embodiments, the present application provides a process of preparing a thermoplastic polystyrene foam comprising E-1,1,1,4,4,4-hexafluoro-2-butene, the process comprising:
i) mixing the polystyrene with PolyFR and a blowing agent comprising about 75 weight percent or less Z-1,1,1,4,4,4-hexafluoro-2-butene and an additional co-blowing agent which is HFC-152a, to form a first polystyrene mixture;
ii) heating the first polystyrene mixture to a first temperature greater than 230°C to form a second polystyrene mixture comprising E-1,1,1,4,4,4-hexafluoro-2-butene; and
iii) extruding the second polymer mixture at a temperature of from about 110°C to about 140°C to form the thermoplastic polymer foam.

In some embodiments, the process further comprises heating the second polystyrene mixture to a second temperature which is greater than the first temperature, prior to the extruding of step iii).

### EXAMPLES

The invention will be described in greater detail by way of specific examples. The following examples are offered for illustrative purposes, and are not intended to limit the invention in any manner.

### Apparatus and General Method for Testing Chemical Reactivity under Polystyrene Foam Extrusion Conditions

Blowing agents (BAs) used in the manufacture of extruded polystyrene (XPS) foam were exposed during the extrusion process to conditions at which they could chemically react and be transformed. Candidate BA formulations containing HFO-1336mzz(Z) were tested in the Examples described herein for chemical stability under conditions representative of XPS foam manufacturing.

Materials (*e.g*., polystyrene resin, nucleator, fire retardant, colorant, BA and/or co-BA) were charged into a 400 mL or 210 mL Hastelloy^{®} C-276 shaker tube, serving as a reaction vessel. Shaker tubes were equipped with electric heaters capable of reaching up to about 450°C. The shaker-tube contents were exposed to a prescribed temperature-time schedule that approximated the temperature-residence time profile that the BA could be exposed to during polystyrene foam extrusion. The tubes 'shook' back and forth to agitate the tube contents throughout a test. A representative sample of the fluid mixture in the shaker tube was collected after completion of the prescribed reaction schedule and analyzed through Gas Chromatography and Mass Spectrometry

### Example 1. Generation of HFO-1336mzz(E) Under Polystyrene Foam Extrusion Conditions Using an HFO-1336mz(Z)/HFC-152a 50/50wt% Blend as the Blowing Agent

This example demonstrates that HFO-1336mzz(Z) under conditions that could be practiced to extrude polystyrene foam is susceptible to stereo-isomerization to HFO-1336mzz(E). The following materials were loaded into a 400 mL Hastelloy^{®} C-276 shaker tube serving as a reaction vessel: 66 grams of polystyrene homopolymer with a Melt Flow Index of 5; 1 gr of nucleator; 1 gr of brominated flame retardant; 10 gr of blowing agent consisting of 50 wt% HFO-1336mzz(Z) and 50 wt% of HFC-152a. The reactor contents were heated to a core temperature of 230 C for 2.5 hours. Analysis of the fluid mixture in the shaker tube after the completion of the exposure of the reactor contents to temperatures higher than room temperature indicated the presence of both HFO-1336mzz(Z) and HFO-1336mzz(E) in a weight ratio of 87.5 to 12.5.

### Example 2. Generation of HFO-1336mzz(E) Under Polystyrene Foam Extrusion Conditions Using an HFO-1336mz(Z)/HFC-152a 15/85wt% Blend as the Blowing Agent

This example demonstrates that HFO-1336mzz(Z) under conditions that could be used to extrude polystyrene foam is susceptible to stereo-isomerization to HFO-1336mzz(E). The following materials were loaded into a 210 mL Hastelloy^{®} C-276 shaker tube serving as a reaction vessel: 66 grams of polystyrene homopolymer with a Melt Flow Index of 5; 1 gr of nucleator; 1 gr of brominated flame retardant; 10 gr of blowing agent consisting of 15 wt% HFO-1336mzz(Z) and 85 wt% of HFC-152a. The reactor contents were heated to a core temperature of 230 C for 2.5 hours. Analysis of the fluid mixture in the shaker tube after the completion of the exposure of the reactor contents to temperatures higher than room temperature indicated that presence of both HFO-1336mzz(Z) and HFO-1336mzz(E) in a weight ratio of 86.5 to 13.5.

## Claims

1. A process of preparing a thermoplastic polymer comprising E-1,1,1,4,4,4-hexafluoro-2-butene, the process comprising heating the polymer in the presence of a blowing agent comprising Z-1,1,1,4,4,4-hexafluoro-2-butene and at least one additional co-blowing agent, at a temperature sufficient to isomerize at least a portion of the Z-1,1,1,4,4,4-hexafluoro-2-butene to the E-1,1,1,4,4,4-hexafluoro-2-butene,
wherein the temperature sufficient to isomerize at least a portion of the Z-1,1,1,4,4,4-hexafluoro-2-butene to the E-1,1,1,4,4,4-hexafluoro-2-butene is at least 230°C.

2. The process of claim 1, wherein the blowing agent is substantially free of the E-1,1,1,4,4,4-hexafluoro-2-butene prior to the heating.

3. The process of claim 1 or 2, wherein the temperature sufficient to isomerize at least a portion of the Z-1,1,1,4,4,4-hexafluoro-2-butene to the E-1,1,1,4,4,4-hexafluoro-2-butene is at least 250°C, preferably is from 250°C to 350°C, and wherein the process is more preferably performed at a pressure of from 689 kPa to 34474 kPa (100 psi to 5000 psi).

4. The process of any one of claims 1 to 3, wherein the process is performed in the presence of an isomerization catalyst,
wherein the isomerization catalyst preferably comprises a halogenated flame retardant agent, more preferably a brominated flame retardant agent or a chlorinated flame retardant agent, or
wherein the isomerization catalyst preferably is a polymeric flame retardant agent, or
wherein the isomerization catalyst preferably is a hydrogen halide, more preferably hydrogen bromide or hydrogen chloride.

5. The process of claim 4, wherein the temperature sufficient to isomerize at least a portion of the Z-1,1,1,4,4,4-hexafluoro-2-butene to the E-1,1,1,4,4,4-hexafluoro-2-butene is at least 230°C to 350°C, and preferably is 230°C.

6. The process of any one of claims 1 to 5, wherein the additional co-blowing agent is selected from HFC-152a, HFC-134, HFC-134a, HFC-236ea, HFC-245fa, HFC-365mfc, CO₂, dimethyl ether, ethanol, methyl formate, E-HFO-1234ze, Z-HFO-1234ze, E-HCFO-1233zd, Z-HCFO-1233zd, E-HCFO-1224yd, Z-HCFO-1224yd, and HFO-1234yf, or any combination thereof and wherein the additional co-blowing agent preferably is HFC-152a.

7. The process of any one of claims 1 to 6, wherein the blowing agent comprises 75 weight percent or less of the Z-1,1,1,4,4,4-hexafluoro-2-butene, and preferably comprises 10 to 75 weight percent Z-1,1,1,4,4,4-hexafluoro-2-butene.

8. The process of any one of claims 1 to 7, wherein the thermoplastic polymer comprises a mixture of E-1,1,1,4,4,4-hexafluoro-2-butene and Z-1,1,1,4,4,4-hexafluoro-2-butene.

9. The process of any one of claims 1 to 8, wherein 10 weight percent or greater of the Z-1,1,1,4,4,4-hexafluoro-2-butene is isomerized to the E-1,1,1,4,4,4-hexafluoro-2-butene and wherein preferably 10 weight percent to 20 weight percent of the Z-1,1,1,4,4,4-hexafluoro-2-butene is isomerized to the E-1,1,1,4,4,4-hexafluoro-2-butene.

10. The process of any one of claims 1 to 9, wherein the process is performed in the presence of a nucleating agent, wherein the nucleating agent preferably is selected from talc, graphite and magnesium silicate.

11. The process of any one of claims 1 to 11, wherein the thermoplastic polymer is an alkenyl aromatic polymer or wherein the thermoplastic polymer is selected from polystyrene, acrylonitrile butadiene styrene, styrene acrylonitrile co-polymer, and blends thereof.

12. The process of any one of claims 1 to 11, further comprising extruding the thermoplastic polymer to form a thermoplastic polymer foam, wherein the extruding is preferably performed at a die temperature of from 100°C to 150°C, and in particular at a die temperature of from 110°C to 140°C.

13. The process of claim 12, wherein the extruding is performed at a pressure of from 689 kPa to 34474 kPa (100 psi to 5000 psi).

14. The process of claim 1 comprising:
i) mixing the polystyrene with a blowing agent comprising Z-1,1,1,4,4,4-hexafluoro-2-butene and an additional co-blowing agent which is HFC-152a, to form a first polystyrene mixture;
ii) heating the first polystyrene mixture to a temperature greater than 250°C to form a second polystyrene mixture comprising E-1,1,1,4,4,4-hexafluoro-2-butene; and
iii) extruding the second polystyrene mixture at a temperature of from 110°C to 140°C to form the thermoplastic polystyrene foam.

15. The process of claim 1 comprising:
i) mixing the polystyrene with PolyFR and a blowing agent comprising 75 weight percent or less Z-1,1,1,4,4,4-hexafluoro-2-butene and an additional co-blowing agent which is HFC-152a, to form a first polystyrene mixture;
ii) heating the first polystyrene mixture to a first temperature of at least 230°C to form a second polystyrene mixture comprising E-1,1,1,4,4,4-hexafluoro-2-butene; and
iii) extruding the second polymer mixture at a temperature of from 110°C to 140°C to form the thermoplastic polymer foam.

## Patentansprüche

1. Verfahren zur Herstellung eines thermoplastischen Polymers umfassend E-1,1,1,4,4,4-Hexafluor-2-buten, wobei das Verfahren das Erhitzen des Polymers in Gegenwart eines Treibmittels, das Z-1,1,1,4,4,4-Hexafluor-2-buten und mindestens ein zusätzliches Co-Treibmittel umfasst, bei einer Temperatur umfasst, die ausreicht, um mindestens einen Teil des Z-1,1,1,4,4,4-Hexafluor-2-butens zu E-1,1,1,4,4,4-Hexafluor-2-buten zu isomerisieren,
wobei die Temperatur, die ausreicht, um mindestens einen Teil des Z-1,1,1,4,4,4-Hexafluor-2-butens zu E-1,1,1,4,4,4-Hexafluor-2-buten zu isomerisieren, mindestens 230 °C beträgt.

2. Verfahren nach Anspruch 1, wobei das Treibmittel vor dem Erhitzen im Wesentlichen frei von dem E-1,1,1,4,4,4-Hexafluor-2-buten ist.

3. Verfahren nach Anspruch 1 oder 2, wobei die Temperatur, die ausreicht, um mindestens einen Teil des Z-1,1,1,4,4,4-Hexafluor-2-butens zu E-1,1,1,4,4,4-Hexafluor-2-buten zu isomerisieren, mindestens 250 °C, bevorzugt 250 °C bis 350 °C beträgt und wobei das Verfahren noch bevorzugter unter einem Druck von 689 kPa bis 34474 kPa (100 psi bis 5000 psi) ausgeführt wird.

4. Verfahren nach einem der Ansprüche 1 bis 3, wobei das Verfahren in Gegenwart eines Isomerisierungskatalysators ausgeführt wird,
wobei der Isomerisierungskatalysator bevorzugt ein halogeniertes flammhemmendes Mittel, noch bevorzugter ein bromiertes flammhemmendes Mittel oder ein chloriertes flammhemmendes Mittel umfasst oder
wobei der Isomerisierungskatalysator bevorzugt ein polymeres flammhemmendes Mittel ist oder
wobei der Isomerisierungskatalysator bevorzugt ein Halogenwasserstoff, noch bevorzugter Bromwasserstoff oder Chlorwasserstoff ist.

5. Verfahren nach Anspruch 4, wobei die Temperatur, die ausreicht, um mindestens einen Teil des Z-1,1,1,4,4,4-Hexafluor-2-butens zu E-1,1,1,4,4,4-Hexafluor-2-buten zu isomerisieren, mindestens 230 °C bis 350 °C und bevorzugt 230 °C beträgt.

6. Verfahren nach einem der Ansprüche 1 bis 5, wobei das zusätzliche Co-Treibmittel ausgewählt wird unter HFC-152a, HFC-134, HFC-134a, HFC-236ea, HFC-245fa, HFC-365mfc, CO₂, Dimethylether, Ethanol, Methylformiat, E-HFO-1234ze, Z-HFO-1234ze, E-HCFO-1233zd, Z-HCFO-1233zd, E-HCFO-1224yd, Z-HCFO-1224yd und HFO-1234yf oder irgendeiner Kombination davon und wobei das zusätzliche Co-Treibmittel bevorzugt HFC-152a ist.

7. Verfahren nach einem der Ansprüche 1 bis 6, wobei das Treibmittel 75 Gewichtsprozent oder weniger des Z-1,1,1,4,4,4-Hexafluor-2-butens umfasst und bevorzugt 10 bis 75 Gewichtsprozent Z-1,1,1,4,4,4-Hexafluor-2-buten umfasst.

8. Verfahren nach einem der Ansprüche 1 bis 7, wobei das thermoplastische Polymer eine Mischung von E-1,1,1,4,4,4-Hexafluor-2-buten und Z-1,1,1,4,4,4-Hexafluor-2-buten umfasst.

9. Verfahren nach einem der Ansprüche 1 bis 8, wobei 10 Gewichtsprozent oder mehr des Z-1,1,1,4,4,4-Hexafluor-2-butens zu E-1,1,1,4,4,4-Hexafluor-2-buten isomerisiert werden und wobei bevorzugt 10 Gewichtsprozent bis 20 Gewichtsprozent des Z-1,1,1,4,4,4-Hexafluor-2-butens zu E-1,1,1,4,4,4-Hexafluor-2-buten isomerisiert werden.

10. Verfahren nach einem der Ansprüche 1 bis 9, wobei das Verfahren in Gegenwart eines Keimbildners ausgeführt wird, wobei der Keimbildner bevorzugt unter Talkum, Graphit und Magnesiumsilicat ausgewählt wird.

11. Verfahren nach einem der Ansprüche 1 bis 11, wobei das thermoplastische Polymer ein alkenylaromatisches Polymer ist oder wobei das thermoplastische Polymer unter Polystyrol, Acrylnitril-Butadien-Styrol, Styrol-Acrylnitril-Copolymer und Mischungen davon ausgewählt wird.

12. Verfahren nach einem der Ansprüche 1 bis 11, ferner das Extrudieren des thermoplastischen Polymers zum Bilden eines thermoplastischen Polymerschaumstoffs umfasst, wobei das Extrudieren bevorzugt bei einer Düsentemperatur von 100 °C bis 150 °C und insbesondere bei einer Düsentemperatur von 110 °C bis 140 °C ausgeführt wird.

13. Verfahren nach Anspruch 12, wobei das Extrudieren bei einem Druck von 689 kPa bis 34474 kPa (100 psi bis 5000 psi) ausgeführt wird.

14. Verfahren nach Anspruch 1, umfassend:
i) Mischen des Polystyrols mit einem Treibmittel umfassend Z-1,1,1,4,4,4-Hexafluor-2-buten und ein zusätzliches Co-Treibmittel, das HFC-152a ist, um eine erste Polystyrolmischung zu bilden;
ii) Erhitzen der ersten Polystyrolmischung auf eine Temperatur über 250 °C, um eine zweite Polystyrolmischung zu bilden, die E-1,1,1,4,4,4-Hexafluor-2-buten umfasst; und
iii) Extrudieren der zweiten Polystyrolmischung bei einer Temperatur von 110 °C bis 140 °C, um den thermoplastischen Polystyrolschaumstoff zu bilden.

15. Verfahren nach Anspruch 1, umfassend:
i) Mischen des Polystyrols mit PolyFR und einem Treibmittel umfassend 75 Gewichtsprozent oder weniger Z-1,1,1,4,4,4-Hexafluor-2-buten und ein zusätzliches Co-Treibmittel, das HFC-152a ist, um eine erste Polystyrolmischung zu bilden;
ii) Erhitzen der ersten Polystyrolmischung auf eine erste Temperatur von mindestens 230 °C, um eine zweite Polystyrolmischung zu bilden, die E-1,1,1,4,4,4-Hexafluor-2-buten umfasst; und
iii) Extrudieren der zweiten Polymermischung bei einer Temperatur von 110 °C bis 140 °C, um den thermoplastischen Polymerschaumstoff zu bilden.

## Revendications

1. Procédé de préparation d'un polymère thermoplastique comprenant du E-1,1,1,4,4,4-hexafluoro-2-butène, le procédé comprenant le chauffage du polymère en présence d'un agent d'expansion comprenant du Z-1,1,1,4,4,4-hexafluoro-2-butène et au moins un co-agent d'expansion additionnel, à une température suffisante pour isomériser au moins une portion du Z-1,1,1,4,4,4-hexafluoro-2-butène en E-1,1,1,4,4,4-hexafluoro-2-butène,
dans lequel la température suffisante pour isomériser au moins une portion du Z-1,1,1,4,4,4-hexafluoro-2-butène en E-1,1,1,4,4,4-hexafluoro-2-butène est d'au moins 230 °C.

2. Procédé selon la revendication 1, dans lequel l'agent d'expansion est sensiblement exempt de E-1,1,1,4,4,4-hexafluoro-2-butène avant le chauffage.

3. Procédé selon la revendication 1 ou 2, dans lequel la température suffisante pour isomériser au moins une portion du Z-1,1,1,4,4,4-hexafluoro-2-butène en E-1,1,1,4,4,4-hexafluoro-2-butène est d'au moins 250 °C, préférablement de 250 °C à 350 °C, et dans lequel le procédé est plus préférablement effectué à une pression de 689 kPa à 34 474 kPa (100 psi à 5 000 psi).

4. Procédé selon l'une quelconque des revendications 1 à 3, dans lequel le procédé est effectué en présence d'un catalyseur d'isomérisation,
dans lequel le catalyseur d'isomérisation comprend préférablement un agent ignifuge halogéné, plus préférablement un agent ignifuge bromé ou un agent ignifuge chloré, ou
dans lequel le catalyseur d'isomérisation est préférablement un agent ignifuge polymère, ou
dans lequel le catalyseur d'isomérisation est préférablement un halogénure d'hydrogène, plus préférablement du bromure d'hydrogène ou du chlorure d'hydrogène.

5. Procédé selon la revendication 4, dans lequel la température suffisante pour isomériser au moins une portion du Z-1,1,1,4,4,4-hexafluoro-2-butène en E-1,1,1,4,4,4-hexafluoro-2-butène est d'au moins 230 °C à 350 °C, et préférablement de 230 °C.

6. Procédé selon l'une quelconque des revendications 1 à 5, dans lequel le co-agent d'expansion additionnel est sélectionné parmi le HFC-152a, HFC-134, HFC-134a, HFC-236ea, HFC-245fa, HFC-365mfc, CO₂, l'éther de diméthyle, l'éthanol, le formiate de méthyle, le E-HFO-1234ze, Z-HFO-1234ze, E-HCFO-1233zd, Z-HCFO-1233zd, E-HCFO-1224yd, Z-HCFO-1224yd, et le HFO-1234yf, ou une combinaison quelconque de ceux-ci et dans lequel le co-agent d'expansion additionnel est préférablement le HFC-152a.

7. Procédé selon l'une quelconque des revendications 1 à 6, dans lequel l'agent d'expansion comprend 75 pour cent en poids ou moins de Z-1,1,1,4,4,4-hexafluoro-2-butène, et comprend préférablement de 10 à 75 pour cent en poids de Z-1,1,1,4,4,4-hexafluoro-2-butène.

8. Procédé selon l'une quelconque des revendications 1 à 7, dans lequel le polymère thermoplastique comprend un mélange de E-1,1,1,4,4,4-hexafluoro-2-butène et de Z-1,1,1,4,4,4-hexafluoro-2-butène.

9. Procédé selon l'une quelconque des revendications 1 à 8, dans lequel 10 pour cent en poids ou plus du Z-1,1,1,4,4,4-hexafluoro-2-butène est isomérisé en E-1,1,1,4,4,4-hexafluoro-2-butène et dans lequel, préférablement, 10 pour cent en poids à 20 pour cent en poids du Z-1,1,1,4,4,4-hexafluoro-2-butène est isomérisé en E-1,1,1,4,4,4-hexafluoro-2-butène.

10. Procédé selon l'une quelconque des revendications 1 à 9, dans lequel le procédé est effectué en présence d'un agent de nucléation, dans lequel l'agent de nucléation est préférablement sélectionné parmi le talc, le graphite et le silicate de magnésium.

11. Procédé selon l'une quelconque des revendications 1 à 11, dans lequel le polymère thermoplastique est un polymère aromatique d'alcényle ou dans lequel le polymère thermoplastique est sélectionné parmi le polystyrène, l'acrylonitrile butadiène styrène, le co-polymère de styrène acrylonitrile, et des mélanges de ceux-ci.

12. Procédé selon l'une quelconque des revendications 1 à 11, comprenant en outre l'extrusion du polymère thermoplastique pour former une mousse de polymère thermoplastique, dans lequel l'extrusion est préférablement effectuée à une température de filière de 100 °C à 150 °C, et en particulier à une température de filière de 110 °C à 140 °C.

13. Procédé selon la revendication 12, dans lequel l'extrusion est effectuée à une pression de 689 kPa à 34 474 kPa (100 psi à 5 000 psi).

14. Procédé selon la revendication 1 comprenant:
i) le mélange de polystyrène avec un agent d'expansion comprenant du Z-1,1,1,4,4,4-hexafluoro-2-butène et un co-agent d'expansion additionnel qui est le HFC-152a, pour former un premier mélange de polystyrène;
ii) le chauffage du premier mélange de polystyrène à une température supérieure à 250 °C pour former un second mélange de polystyrène comprenant du E-1,1,1,4,4,4-hexafluoro-2-butène; et
iii) l'extrusion du second mélange de polystyrène à une température de 110 °C à 140 °C pour former la mousse de polystyrène thermoplastique.

15. Procédé selon la revendication 1 comprenant:
i) le mélange du polystyrène avec du PolyFR et un agent d'expansion comprenant 75 pour cent en poids ou moins de Z-1,1,1,4,4,4-hexafluoro-2-butène et un co-agent d'expansion additionnel qui est le HFC-152a, pour former un premier mélange de polystyrène;
ii) le chauffage du premier mélange de polystyrène à une première température d'au moins 230 °C pour former un second mélange de polystyrène comprenant du E-1,1,1,4,4,4-hexafluoro-2-butène; et
iii) l'extrusion du second mélange de polymères à une température de 110 °C à 140 °C pour former la mousse de polymère thermoplastique.
